# EUROPÄISCHE PATENTSCHRIFT

(11) **EP 1 879 714 B1**
(45) Veröffentlichungstag und Bekanntmachung des Hinweises auf die Patenterteilung: **31.12.2008**
(21) Anmeldenummer: 06818413.4
(22) Anmeldetag: 08.11.2006
(51) Int. Cl.: B23B 27/16, B23C 5/20

(54) **WENDESCHNEIDPLATTE**
INDEXABLE INSERT
PLAQUETTE REVERSIBLE

(30) Priorität: 15.11.2005 DE 102005054434
(43) Veröffentlichungstag der Anmeldung: 23.01.2008
(73) Patentinhaber: KENNAMETAL INC., Latrobe, PA 15650-0231 (US)
(72) Erfinder: SPITZENBERGER, Konrad, 90768 Fürth (DE)
(74) Vertreter: Sties, Jochen
(86) Internationale Anmeldenummer: PCT/EP2006/010696
(87) Internationale Veröffentlichungsnummer: WO 2007/057113

(56) Entgegenhaltungen:
- EP-A2- 0 313 534
- DE-U1- 20 313 042
- US-A- 3 490 117
- US-A- 4 539 875

## Beschreibung

Die Erfindung betrifft eine Wendeschneidplatte mit zwei Teilkörpern, die ineinander übergehen und jeweils eine mehreckige Grundfläche haben, jedoch gegeneinander verdreht sind.

Eine solche Wendeschneidplatte ist aus der deutschen Auslegeschrift 1 232 436 bekannt. Sie bietet die Möglichkeit, bei einer Wendeschneidplatte, wenn die Grundfläche beispielsweise jeweils ein Quadrat ist, acht Schneiden auszubilden. Indem die beiden Teilkörper gegeneinander verdreht angeordnet sind, können die Schneiden in der gewünschten Geometrie angestellt werden.

Die Aufgabe der Erfindung besteht darin, die bekannte Wendeschneidplatte so zu verbessern, daß sich neue Einsatzmöglichkeiten ergeben.

Zur Lösung dieser Aufgabe ist eine Wendeschneidplatte nach Anspruch 1 vorgesehen, wobei an einem Teilkörper mehrere Schruppschneiden und am anderen Teilkörper mehrere Schlichtschneiden vorgesehen sind, die so angeordnet sind, daß eine Schruppschneide eines Teilkörpers und eine Schlichtschneide des anderen Teilkörper gleichzeitig an einem Werkstück angreifen können. Die Erfindung beruht auf der Erkenntnis, daß an ein und derselben Wendeschneidplatte unterschiedliche Schneiden derart vorgesehen werden können, daß in einem Arbeitsgang gleichzeitig eine Schruppbearbeitung und eine Schlichtbearbeitung vorgenommen werden können. Die Wendeschneidplatte braucht hierfür nicht umgesetzt zu werden, da die Schruppschneiden und die Schlichtschneiden jeweils mit dem für die entsprechende Bearbeitung geeigneten Spanwinkel ausgebildet sind. Dies ist problemlos möglich, da die jeweils gleichzeitig benutzten Schrupp- und Schlichtschneiden an unterschiedlichen Teilkörpern der Wendeschneidplatte vorgesehen sind und dadurch unabhängig voneinander ausgeführt werden können.

Jeder Teilkörper kann grundsätzlich ein beliebiges n-Eck sein, wobei n eine beliebige natürliche Zahl ist.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 eine perspektivische Ansicht einer Wendeschneidplatte, die an einem Werkstück angreift;
- Figur 2 eine Seitenansicht eines Fräsers mit mehreren Wendeschneidplatten gemäß Figur 1, die an einem Werkstück angreifen;
- Figur 3 eine Vorderansicht der Wendeschneidplatte von Figur 1;
- Figur 4 eine Seitenansicht der Wendeschneidplatte von Figur 3; und
- Figur 5 in vergrößertem Maßstab das Detail V von Figur 3.

In den Figuren ist eine Wendeschneidplatte 10 gezeigt, die aus zwei Teilkörpern 12, 14 zusammengesetzt ist. Jeder Teilkörper 12, 14 hat eine quadratische Grundfläche 16 und allgemein die Form eines Pyramidenstumpfes. Die beiden Teilkörper 12, 14 sind mit der Deckfläche des Pyramidenstumpfes aneinandergesetzt, also mit der der Grundfläche 16 gegenüberliegenden, kleineren Fläche.

Jeder Teilkörper 12, 14 weist vier Seitenflächen 18, 20, 22, 24 auf, die von der jeweiligen Grundfläche 16 ausgehen und sich hin zum anderen Teilkörper erstrecken. Jede Seitenfläche kann sich wiederum aus mehreren kleineren Teilflächen zusammensetzen.

Es sei darauf hingewiesen, daß der Begriff "Pyramidenstumpf" hier nicht im mathematischen Sinne verstanden werden soll, sondern lediglich angibt, daß die Seitenflächen 18, 20, 22, 24 jedes Teilkörpers, ausgehend von der entsprechenden Grundfläche 16, geringfügig zusammenlaufen. Anders ausgedrückt ist die Wendeschneidplatte in der Mitte zwischen den beiden Grundflächen 16 etwas eingeschnürt. Es sei auch darauf hingewiesen, daß die beiden Teilkörper 12, 14 nicht mittels einer definierten Kante ineinander übergehen müssen, sondern daß zwischen den beiden Teilkörpern auch ein Übergangsabschnitt vorgesehen sein kann, beispielsweise nach Art einer Hohlkehle.

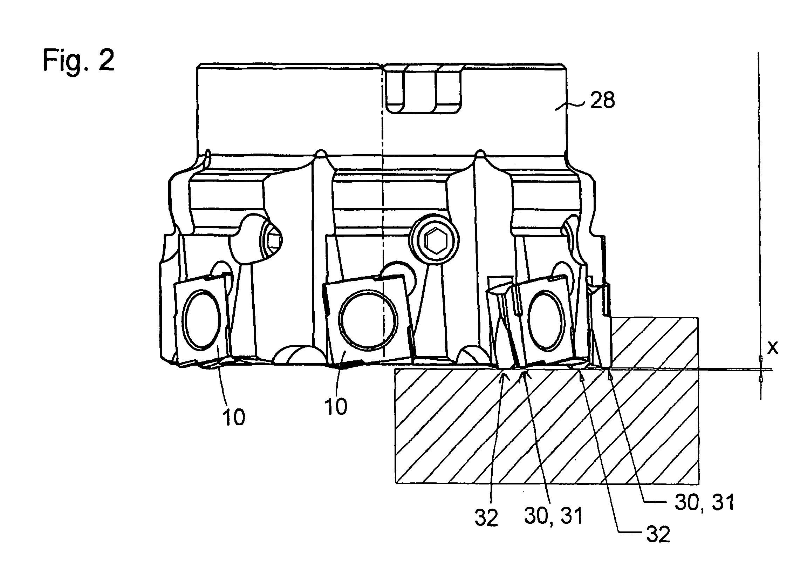

Mittig durch die Wendeschneidplatte erstreckt sich eine Öffnung 26, deren Mittelachse senkrecht zu den Grundflächen 16 der Wendeschneidplatte ist. Durch die Öffnung 26 kann ein Befestigungselement gesteckt werden, um die Wendeschneidplatte an einem Halter wie einem Fräser 28 (siehe Figur 2) zu befestigen.

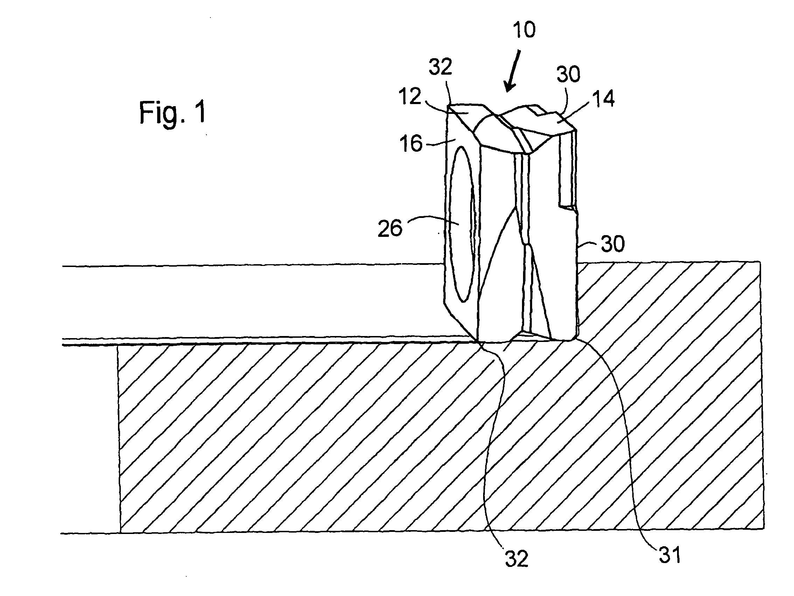

Wesentliches Merkmal der Wendeschneidplatte ist, daß die beiden Teilkörper 12, 14 gegeneinander verdreht sind, und zwar um eine Achse, die senkrecht zu den Grundflächen 16 ist und mittig durch diese hindurchverläuft. Beim gezeigten Ausführungsbeispiel fällt diese Achse mit der Mittelachse der Öffnung 26 zusammen. Beim gezeigten Ausführungsbeispiel ist der Teilkörper 12 relativ zum Teilkörper 14 im Uhrzeigersinn verdreht, so daß, bezogen auf Figur 1, die "vordere untere" Ecke des Teilkörpers 12 tiefer steht als die "vordere untere" Ecke des Teilkörpers 14.

An einem der Teilkörper, hier am Teilkörper 14, sind vier Schruppschneiden 30 gebildet, und am anderen Teilkörper, hier am Teilkörper 12, sind vier Schlichtschneiden 32 gebildet.

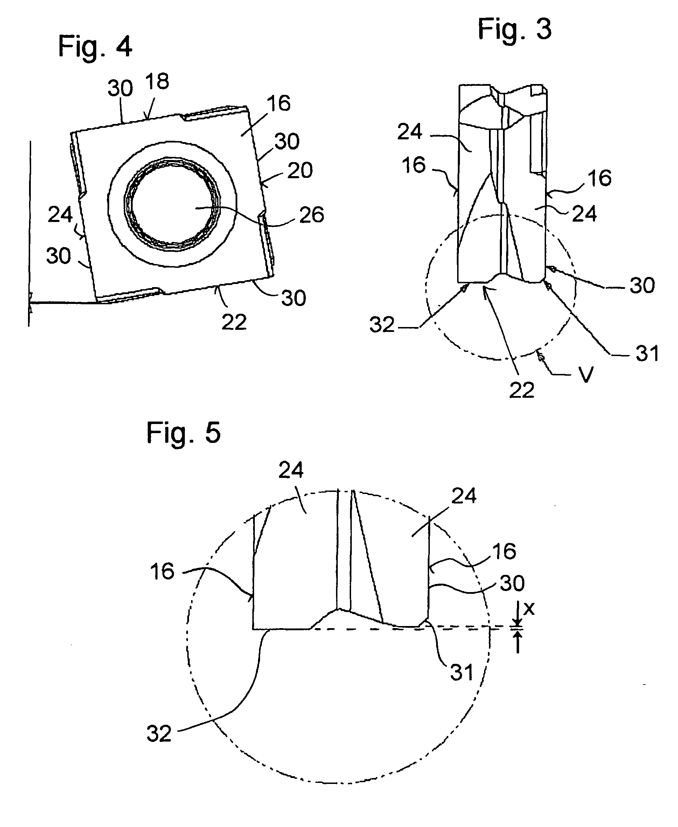

Jede Schruppschneide 30 ist gebildet durch die Kante zwischen der Grundfläche 16 des Teilkörpers 14 und einer der Seitenflächen 18, 20, 22, 24. Wie in den Figuren 3 und 5 zu sehen ist, kann die Berührkante zwischen zwei Seitenflächen so ausgestaltet werden, daß sie als Fortsetzung der entsprechenden Schruppschneide 30 wirkt. Diese Fortsetzung der Schruppschneide 30 kann als Eckenradius bzw. Einzel- oder Doppeleckenfase 31 oder auch als eine Kombination daraus ausgebildet sein.

Jede Schlichtschneide 32 ist gebildet an der Schnittfläche zwischen zwei der Seitenflächen 18, 20, 22, 24 des Teilkörpers 12. Die Schlichtschneiden stehen somit etwa senkrecht zu den Schruppschneiden.

Wesentliches Merkmal ist, daß aufgrund der Verdrehung der beiden Teilkörper 12, 14 relativ zueinander von den bei einer bestimmten Orientierung der Wendeschneidplatte aktiven beiden Schneiden, also einer Schruppschneide 30, 31 und einer Schlichtschneide 32, eine Schneide weiter zum Werkstück hin vorsteht als die andere. Wie insbesondere in den Figuren 1 und 5 zu sehen ist, steht die Schlichtschneide 32 mehr zum Werkstück hin hervor als die Schruppschneide 30, 31. Diese Differenz x beträgt vorzugsweise in der Größenordnung von 0,01 bis 0,1 mm, bevorzugt 0,02 bis 0,04mm. Auf diese Weise wird gewährleistet, daß die Schruppschneide 30, 31 für den Großteil des Materialabtrags zuständig ist, während die Feinbearbeitung von der Schlichtschneide 32 vorgenommen wird, die entsprechend wenig Material abtragen muß.

## Patentansprüche

1. Wendeschneidplatte (10) mit zwei Teilkörpern (12, 14), die ineinander übergehen und jeweils eine mehreckige Grundfläche haben, jedoch gegeneinander verdreht sind, **dadurch gekennzeichnet, daß** an einem Teilkörper (14) mehrere Schruppschneiden (30, 31) und am anderen Teilkörper (12) mehrere Schlichtschneiden (32) vorgesehen sind, die so angeordnet sind, daß eine Schruppschneide (30, 31) eines Teilkörpers (14) und eine Schlichtschneide (32) des anderen Teilkörpers (12) gleichzeitig an einem Werkstück angreifen können.

2. Wendeschneidplatte nach Anspruch 1, **dadurch gekennzeichnet, daß** die Grundfläche (16) n-eckig ist.

3. Wendeschneidplatte nach Anspruch 2, **dadurch gekennzeichnet, daß** die Grundfläche (16) quadratisch ist.

4. Wendeschneidplatte nach einem der vorhergehenden Ansprüche, **dadurch gekennzeichnet, daß** jeder Teilkörper (12, 14) allgemein die Form eines Pyramidenstumpfes hat, wobei die beiden Pyramidenstümpfe an ihren Deckflächen ineinander übergehen.

5. Wendeschneidplatte nach einem der vorhergehenden Ansprüche, **dadurch gekennzeichnet, daß** die Schruppschneiden (30, 31) gebildet sind durch die Schnittlinie zwischen einer Grundfläche (16) eines Teilkörpers (12, 14) und einer Seitenfläche (18, 20, 22, 24).

6. Wendeschneidplatte nach Anspruch 5, **dadurch gekennzeichnet, daß** die Schruppschneiden verlängert sind durch die Schnittlinie (31) zwischen zwei aneinandergrenzende Seitenflächen (18, 20, 22, 24).

7. Wendeschneidplatte nach Anspruch 6, **dadurch gekennzeichnet, daß** die als Schruppschneide wirkende Schnittlinie (31) zwischen zwei aneinandergrenzenden Seitenflächen als Eckenradius (31), Einzeleckenfase (31) oder Doppeleckenfase ausgebildet ist.

8. Wendeschneidplatte nach Anspruch 7, **dadurch gekennzeichnet, daß** die als Schruppschneide wirkende Schnittlinie (31) zwischen zwei aneinandergrenzenden Seitenflächen als Kombination aus Eckenradius (31), Einzeleckenfase (31) und/oder Doppeleckenfase ausgebildet ist.

9. Wendeschneidplatte nach einem der vorhergehenden Ansprüche, **dadurch gekennzeichnet, daß** die Schlichtschneide (32) gekrümmt verläuft.

10. Wendeschneidplatte nach einem der Ansprüche 1 bis 8, **dadurch gekennzeichnet, daß** die Schlichtschneide (32) gerade verläuft.

11. Wendeschneidplatte nach einem der vorhergehenden Ansprüche, **dadurch gekennzeichnet, daß** die Schlichtschneide (32), in der Arbeitsposition der Wendeschneidplatte (10), zwischen 0,01 und 0,1 mm über die Schruppschneide (30, 31) nach außen vorsteht.

## Claims

1. Indexable insert (10) comprising two component bodies (12, 14) which merge into one another and each have a polygonal base, but have been rotated with respect to one another, **characterized in that** a plurality of roughing cutting edges (30, 31) are provided on one component body (14) and a plurality of finishing cutting edges (32) are provided on the other component body (12), these cutting edges being arranged in such a way that a roughing cutting edge (30, 31) of one component body (14) and a finishing cutting edge (32) of the other component body (12) can act simultaneously on a workpiece.

2. Indexable insert according to Claim 1, **characterized in that** the base (16) is n-cornered.

3. Indexable insert according to Claim 2, **characterized in that** the base (16) is square.

4. Indexable insert according to one of the preceding claims, **characterized in that** each component body (12, 14) generally has the shape of a truncate pyramid, wherein the two truncated pyramids merge into one another at their top faces.

5. Indexable insert according to one of the preceding claims, **characterized in that** the roughing cutting edges (30, 31) are formed by the line of intersection between a base (16) of a component body (12, 14) and a lateral face (18, 20, 22, 24).

6. Indexable insert according to Claim 5, **characterized in that** the roughing cutting edges are prolonged by the line of intersection (31) between two adjoining lateral faces (18, 20, 22, 24).

7. Indexable insert according to Claim 7, **characterized in that** the line of intersection (31) between two adjoining lateral faces which acts as a roughing cutting edge is formed as a corner radius (31), single corner bevel (31) or double corner bevel.

8. Indexable insert according to Claim 7, **characterized in that** the line of intersection (31) between two adjoining lateral faces which acts as a roughing cutting edge is formed as a combination of corner radius (31), single corner bevel (31) and/or double corner bevel.

9. Indexable insert according to one of the preceding claims, **characterized in that** the finishing cutting edge (32) extends with a curved profile.

10. Indexable insert according to one of Claims 1 to 9, **characterized in that** the finishing cutting edge (32) extends with a straight profile.

11. Indexable insert according to one of the preceding claims, **characterized in that,** with the indexable insert (10) in the working position, the finishing cutting edge (32) projects outwardly beyond the roughing cutting edge (30, 31) by between 0.01 and 0.1 mm.

## Revendications

1. Plaquette de coupe réversible (10) comprenant deux corps partiels (12, 14) qui se prolongent l'un dans l'autre et qui ont chacun une surface de base polygonale, mais qui sont tournés l'un par rapport à l'autre, **caractérisée en ce que** plusieurs lames de coupe d'ébauche (30, 31) sont prévues sur un corps partiel (14) et plusieurs lames de coupe de finition (32) sont prévues sur l'autre corps partiel (12), lesquelles sont disposées de telle sorte qu'une lame de coupe d'ébauche (30, 31) d'un corps partiel (14) et une lame de coupe de finition (32) de l'autre corps partiel (12) puissent s'appliquer simultanément sur une pièce.

2. Plaquette de coupe réversible selon la revendication 1, **caractérisée en ce que** la surface de base (16) possède n coins.

3. Plaquette de coupe réversible selon la revendication 2, **caractérisée en ce que** la surface de base (16) est carrée.

4. Plaquette de coupe réversible selon l'une quelconque des revendications précédentes, **caractérisée en ce que** chaque corps partiel (12, 14) présente généralement la forme d'un tronc de pyramide, les deux troncs de pyramide se prolongeant l'un dans l'autre au niveau de leurs surfaces supérieures.

5. Plaquette de coupe réversible selon l'une quelconque des revendications précédentes, **caractérisée en ce que** les lames de coupe d'ébauche (30, 31) sont formées par la ligne de coupe entre une surface de base (16) d'un corps partiel (12, 14) et une surface latérale (18, 20, 22, 24).

6. Plaquette de coupe réversible selon la revendication 5, **caractérisée en ce que** les lames de coupe d'ébauche sont prolongées par la ligne de coupe (31) entre deux surfaces latérales adjacentes (18, 20, 22, 24).

7. Plaquette de coupe réversible selon la revendication 6, **caractérisée en ce que** la ligne de coupe (31) agissant en tant que lame de coupe d'ébauche est réalisée entre deux surfaces latérales adjacentes sous forme de rayon de coin (31), de simple biseau de coin (31) ou de double biseau de coin.

8. Plaquette de coupe réversible selon la revendication 7, **caractérisée en ce que** la ligne de coupe (31) agissant en tant que lame de coupe d'ébauche est réalisée entre deux surfaces latérales adjacentes sous forme de combinaison du rayon de coin (31), du simple biseau de coin (31) et/ou du double biseau de coin.

9. Plaquette de coupe réversible selon l'une quelconque des revendications précédentes, **caractérisée en ce que** la lame de coupe de finition (32) est courbe.

10. Plaquette de coupe réversible selon l'une quelconque des revendications 1 à 9, **caractérisée en ce que** la lame de coupe de finition (32) est droite.

11. Plaquette de coupe réversible selon l'une quelconque des revendications précédentes, **caractérisée en ce que** la lame de coupe de finition (32), dans la position de travail de la plaquette de coupe réversible (10), dépasse vers l'extérieur de 0,01 à 0,1 mm au-delà de la lame de coupe d'ébauche (30, 31).
